# EUROPEAN PATENT APPLICATION

(11) **EP 4 653 730 A1**
(43) Date of publication of application: **26.11.2025**
(21) Application number: 24177534.5
(22) Date of filing: 23.05.2024
(51) Int. Cl.: F16J 15/02, F16J 15/3236, F16J 15/12

(54) **DUAL FUNCTION SEAL AND SEALING ARRANGEMENT WITH SUCH A DUAL FUNCTION SEAL**

(71) Applicant: Trelleborg Sealing Solutions Germany GmbH, 70565 Stuttgart (DE)
(72) Inventor: BASHFORD, Peter, Puriton Bridgwater, Somerset, TA78AJ (GB); ANDERSEN, Torben Adrian, 3100 Hornbak (DK)
(74) Representative: Kohler Schmid Möbus Patentanwälte

(57) **Abstract**

A seal (10) according to the invention comprises
- a radial U-shaped primary sealing ring (11) made of elastic polymer material, wherein the primary sealing ring (11) has a base ring section (12) with two parallel axial outer sides (14), two sealing lips (15) extending radially away from the base ring section (12) and being spaced apart from each other and curved outwards in the axial direction (A), and an annular groove (16) provided between the sealing lips (15) and being radially open in the direction away from the base ring section (12), and wherein the sealing lips (15) protrude axially beyond the axial outer sides (14; 114) of the base ring section (12),
- a circumferential spring (17) disposed within the annular groove (16) for energizing the sealing lips (15), and
- a secondary sealing ring (18) made of a material stiffer than the polymer material of the primary sealing ring (11), wherein the base ring section (12) of the radial U-shaped primary sealing ring (11) and the secondary sealing ring (18; 118) radially abut each other.

## Description

The present invention relates to a seal comprising a primary sealing ring made of elastic polymer material, wherein the primary sealing ring has a base ring section, two sealing lips extending away from the base ring section and being spaced apart from each other and curved outwards, and an annular groove provided between the sealing lips and being open in the direction away from the base section, wherein the sealing lips protrude beyond the base ring section, and comprising a circumferential spring disposed within the annular groove for energizing the sealing lips. The present invention also relates to a sealing arrangement for sealing a connection of two components by means of such a seal.

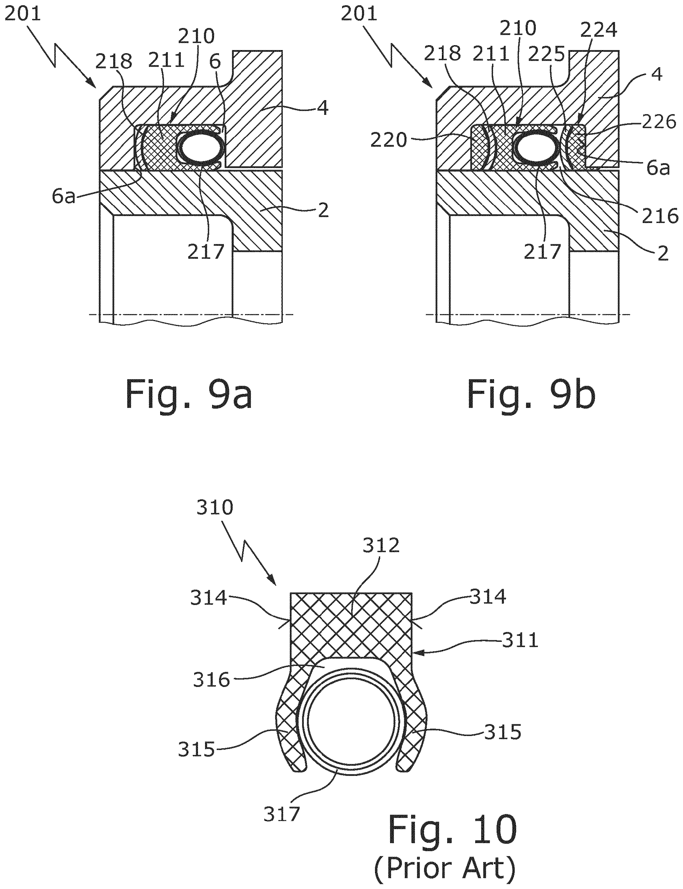

Such a seal is known, e.g. by the *Turcon*^{®} *Variseal*^{®} *HF* seal of the applicant, which is shown in **Fig. 10****.** This seal **310** comprises a radial U-shaped sealing ring **311** made of elastic polymer material and a coiled metallic energizing helical spring **317.** The sealing ring 311 has a base ring section **312** with two parallel axial outer sides **314**, two sealing lips **315** extending from the base ring section 312 radially inwards and being axially spaced apart from each other and curved outwards in the axial direction, and an annular groove **316** provided between the sealing lips 315 and being open radially inwards. The sealing lips 315 protrude beyond the axial outer sides 314 of the base ring section 312. The helical spring 317 is disposed within the annular groove 316 for energizing the sealing lips 315. This known seal has a high specific sealing force and gives gas-tight sealing even at low temperatures. Resistant to most liquids and chemicals it has unlimited shelf life. Used for inside or outside sealing, the seal is available in versions for cryogenic service.

Further, metal O-rings and metal C-rings are also used for gas sealing.

It is the object of the invention to further improve the sealing properties of a seal of the type mentioned above, in particular for sealing of gases, such as Hydrogen and Helium, and low viscosity fluids and to reduce the risk of complete sealing failure.

This object is solved, in accordance with the invention, by a seal comprising
- a radial U-shaped primary sealing ring made of elastic polymer material, wherein the radial U-shaped primary sealing ring has a base ring section with two parallel axial outer sides, two sealing lips extending radially away from the base ring section and being spaced apart from each other and curved outwards in the axial direction, and an annular groove provided between the sealing lips and being radially open in the direction away from the base ring section, and wherein the sealing lips protrude axially beyond the axial outer sides of the base ring section, or an axial U-shaped primary sealing ring made of elastic polymer material, wherein the axial U-shaped primary sealing ring has a base ring section with a radial inner side and a radial outer side, two sealing lips extending axially away from the base ring section and being spaced apart from each other and curved outwards in the radial direction, and an annular groove provided between the sealing lips and being axially open in the direction away from the base ring section, and wherein the sealing lips protrude radially beyond the radial inner and outer sides of the base ring section,
- a circumferential spring disposed within the annular groove for energizing the sealing lips, and
- a secondary sealing ring made of a material stiffer than the polymer material of the primary sealing ring, wherein the base ring section of the radial U-shaped primary sealing ring and the secondary sealing ring radially abut each other, or wherein the base ring section of the axial U-shaped primary sealing ring and the secondary sealing ring axially abut each other.

Preferably, the circumferential spring is a helical spring, but other spring geometries such as V-shape, cantilever springs or slanted coil springs may be used to energize the U-shaped primary sealing ring.

Unlike already known seals that use either polymer materials or metal rings to seal, according to the invention, the seal uses a combination of both technologies and provides a dual sealing effect by the primary and the secondary sealing rings. In a sealing arrangement, the primary sealing ring is energized by the circumferential spring and as the pressure increases, also by the gas. The pressure on the sealing lips from these two forces push the polymer material into irregularities of the mating surface to form a labyrinth obstacle which the gas can only pass with difficulty. Gas pressure acting on the seal can force the primary sealing ring to expand onto the secondary sealing ring and this will further increase the contact forces of the secondary sealing ring, and thus further improve the sealing efficiency.

The dual function seal according to the invention provides the following advantages over existing solutions:
- Very high sealing efficiency at ambient and low temperatures.
- Dual sealing in one seal gland.
- A one-unit seal, eliminating mistakes during assembly and protecting the individual sealing components.
- Redundancy: If one of the two sealing rings fails, the other is likely to continue to work, at least at some level, eliminating the risk of a catastrophic failure. This is a feature of using two different sealing principles, and it would be of importance when considering overall system failure rates and risk.
- Easy one component handling and installation.

As opposed to these advantages, conventional sealing solutions all use one sealing technology only meaning that there is no redundancy should the seal fail.

In one variant of the invention, the annular groove of the radial U-shaped primary sealing ring is radially open inwards and the base ring section of the radial U-shaped primary sealing ring is surrounded by and in contact with the secondary sealing ring. In another variant of the invention, the annular groove of the radial U-shaped primary sealing ring is radially open outwards and the secondary sealing ring is surrounded by and in contact with the base ring section of the radial U-shaped primary sealing ring.

Preferably, the sealing lips of the radial U-shaped primary sealing ring are curved convexly in the axial direction, or the sealing lips of the axial U-shaped primary sealing ring are curved convexly in the radial direction in order to partly encompass the circumferential spring.

In a particularly preferred embodiment of the invention, the base ring section of the radial U-shaped primary sealing ring and the secondary sealing ring are held on each other in an axially non-displaceable manner, in particular by means of a positive-locking connection in order to realize a one-unit seal, eliminating mistakes during assembly and protecting the individual sealing components.

Advantageously, the base ring section of the radial U-shaped primary sealing ring and the secondary sealing ring radially abut each other by radial end sides one of which is curved convexly in the radial direction and the other one is curved concavely in the radial direction, preferably with the same curvature, or the base ring section of the axial U-shaped primary sealing ring and the secondary sealing ring axially abut each other by axial end sides one of which is curved convexly in the axial direction and the other one is curved concavely in the axial direction, preferably with the same curvature.

In a preferred embodiment of the invention, the secondary sealing ring is axially flush with the axial outer sides of the base ring section of the radial U-shaped primary sealing ring or protrudes over the axial outer sides on both sides, or the secondary sealing ring is radially flush with the radial inner and outer sides of the base ring section of the axial U-shaped primary sealing ring or radially protrudes over the radial inner and outer sides on both sides. In the mounted state of the seal, when the seal is compressed between two seal glands, the secondary sealing ring is compressed to the width of the base ring section thereby achieving a high contact pressure and forming an additional sealing area.

Further preferably, the seal comprises a backup ring made of a high strength polymer material, wherein the secondary sealing ring of the radial U-shaped primary sealing ring and the backup ring radially abut each other, or the secondary sealing ring of the radial U-shaped primary sealing ring and the backup ring axially abut each other in order to provide an additional sealing force at low temperature. It is possible to use a material that contracts to a higher degree than the secondary sealing ring. The secondary sealing ring of the radial U-shaped primary sealing ring and the backup ring are held on each other in an axially non-displaceable manner, in particular by means of a positive-locking connection, in order to realize a one-unit seal, eliminating mistakes during assembly and protecting the individual sealing components.

Advantageously, the secondary sealing ring of the radial U-shaped primary sealing ring and the backup ring radially abut each other by radial end sides one of which is curved convexly in the radial direction and the other one is curved concavely in the radial direction, preferably with the same curvature, or the secondary sealing ring of the axial U-shaped primary sealing ring and the backup ring axially abut each other by axial end sides one of which is curved convexly in the axial direction and the other one is curved concavely in the axial direction, preferably with the same curvature.

Preferably, the secondary sealing ring is made from a polymer material or a metallic material which may be plated with a softer material, such as Silver or Tin, to act as a filler between the secondary sealing ring and the surface irregularities of the gland. Using a metallic secondary sealing ring practically eliminates leakage due to permeation, and the very efficient sealing formed by the soft metal coating will reduce the leakage through the contact area very significantly,

In a further aspect, the object invention is solved by a sealing arrangement for sealing a connection of two components, comprising a first component and a second component at least one of which has a ring groove or a stepped recess, and comprising a dual function seal as mentioned above, which is disposed within the ring groove or the stepped recess, wherein the end side, facing away from the sealing lips, of the secondary sealing ring or, if available, the backup ring abuts one of the two opposite groove flanks of the ring groove or a step of the stepped recess, wherein the sealing lips are compressed and elastically deformed between the two components and pressed against the two components by the compressed circumferential spring to seal the connection of the two components.

Optionally, a further seal is disposed within the ring groove between the seal and the other of the two groove flanks of the ring groove, wherein the further seal is pressed against the other groove flank by the compressed circumferential spring which protrudes over the sealing lips. Preferably, the further seal comprises a further secondary sealing ring made of metallic or polymer material and a further backup ring made of a high strength polymer material, which abut each other with the further secondary sealing ring facing the seal and the further backup ring abutting the other groove flank. Advantageously, the further secondary sealing ring is held on the further backup ring in an axially non-displaceable manner, in particular by means of a positive-locking connection, in order to realize a one-unit seal, eliminating mistakes during assembly and protecting the individual sealing components.

Further advantages of the invention will become apparent from the description and the drawing. The embodiments shown and described are not to be understood as being exhaustive but instead is of an exemplary nature for describing the invention.

In the drawings:
- Fig. 1: shows a half section view of a sealing arrangement with a first dual function seal according to the invention;
- Fig. 2: shows a half section view of the first dual function seal of Fig. 1 in an unmounted state;
- Figs. 3a, 3b: show further sealing arrangements with modified first dual function seals according to the invention;
- Fig. 4: shows a half section view of a sealing arrangement with a second dual function seal according to the invention;
- Fig. 5: shows a half section view of the second dual function seal of Fig. 4 in an unmounted state;
- Figs. 6a, 6b: show further sealing arrangements with modified second dual function seals according to the invention;
- Fig. 7: shows a half section view of a sealing arrangement with a third dual function seal according to the invention;
- Fig. 8: shows a half section view of the third dual function seal of Fig. 7 in an unmounted state;
- Figs. 9a, 9b: show further sealing arrangements with modified third dual function seals according to the invention; and
- Fig. 10: shows a conventional s seal for sealing the connection of two components.

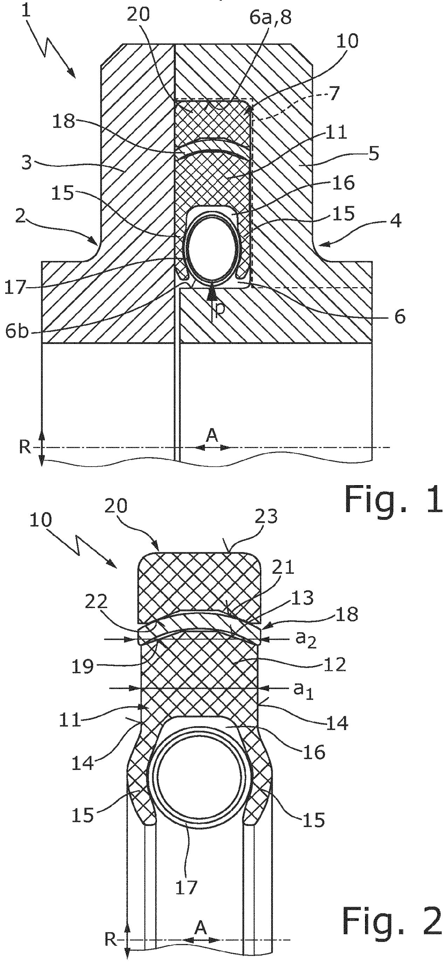

**Fig. 1** shows a sealing arrangement **1** for sealing a connection of two components. The sealing arrangement 1 comprises a first component **2**, here in the form of a pipe component having a first gland **3**, and a second component **4**, here in the form of a pipe component having a second gland **5.** The first and second components 2, 4 are connected to each other by means of the glands 3, 5. The second gland 5 has a ring groove 6 which is axially open. The sealing arrangement 1 further comprises a first seal **10**, which is disposed within the ring groove 6 to seal the glands 3, 5 against each other.

As shown in **Fig. 2**, the seal 10, in the unmounted state, comprises a radial U-shaped primary sealing ring **11** made of elastic polymer material, a metallic helical spring **17**, a secondary sealing ring **18** made of a material stiffer than the polymer material of the primary sealing ring 11, and a backup ring **20** made of a high strength polymer material. Preferably, the secondary sealing ring 18 is made from a polymer material or a metallic material which can be plated with a softer material.

The primary sealing ring 11 has a base ring section **12** with two parallel axial outer sides **14**, two sealing lips **15** extending from the base ring section 12 radially inwards and being axially spaced apart from each other. Further, the primary sealing ring 11 has an annular groove **16** provided between the sealing lips 15 and being open radially inwards. The sealing lips 15 protrude beyond the axial outer sides 14 of the base ring section 12. The helical spring 17 is disposed within the annular groove 16 for energizing the sealing lips 15. In the embodiment shown, the sealing lips 15 are curved convexly in the axial direction **A** in order to partly encompass the helical spring 17.

The base ring section 12 of the primary sealing ring 11 is surrounded by and in circumferential contact with the secondary sealing ring 18. The primary sealing ring 11 and the secondary sealing ring 18 can be held on each other in an axially non-displaceable manner, preferably by means of a positive-locking connection. To this end, the base ring section 12 of the primary sealing ring 11 and the secondary sealing ring 18 can abut each other radially by radial end sides **13**, **19**, which are formed polygonal or curved complementary, preferably with the same curvature. In the embodiment shown, the radial outer end side 13 of the base ring section 12 is curved convexly in the radial direction **R** and the radial inner end side 19 of the secondary sealing ring 18 is curved concavely in the radial direction R, preferably with the same curvature. Preferably, the axial width **a2** of the secondary sealing ring 18 is greater than the axial width **a1** between the axial outer sides 14 of the base ring section 12 such that the secondary sealing ring 18 axially protrudes over the axial outer sides 14 on both sides. Alternatively, the secondary sealing ring 18 can be flush with the axial outer sides 14.

The secondary sealing ring 18 is surrounded by and in circumferential contact with the backup ring 20, which can be held on the secondary sealing ring 18 in an axially non-displaceable manner, preferably by means of a positive-locking connection. To this end, the secondary sealing ring 18 and the backup ring 20 can abut each other radially by radial end sides **21**, **22**, which are formed polygonal or curved complementary, preferably with the same curvature. In the embodiment shown, the radial outer end side 21 of the secondary sealing ring 18 is curved convexly in the radial direction R and the radial inner end side 22 of the backup ring 20 is curved concavely in the radial direction R, preferably with the same curvature. The outer radial side of the backup ring 20 is denoted by **23.**

In the sealing arrangement 1 shown in Fig. 1, the seal 10 is disposed within the ring groove 6 with the outer radial side 23 of the backup ring 20 abutting the, radial outer (low pressure sided) groove flank **6a** of the ring groove 6. The seal 10 is axially compressed between the glands 3, 5 and, as a result, the sealing lips 15 are elastically deformed between the glands 3, 5 and the helical spring 17 is compressed between the sealing lips 15. The sealing lips 15 are pressed against the glands 3, 5 by the compressed helical spring 17 to seal the connection of the glands 3, 5, and by high gas pressure **p** acting in the annular groove 16, whereby the polymer material of the primary sealing ring 11 is pushed into irregularities of the mating surfaces of the glands 3, 5. Further, the high gas pressure p acting on the seal 10 forces the primary sealing ring 11 to expand radially outwards onto the secondary sealing ring 18. This further increases the contact forces of the secondary sealing ring 18 against the glands 3, 5, and thus further improve the sealing efficiency. As a result, the seal 10 forms a dual function seal.

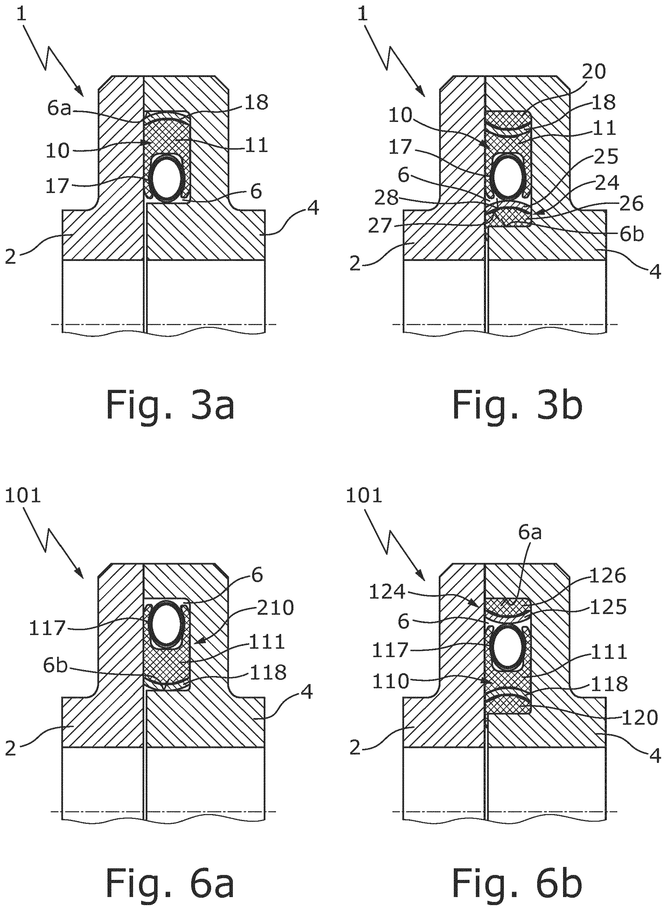

The sealing arrangement 1 shown in **Fig. 3a** differs from Fig. 1 only in that no backup ring is provided within the ring groove 6. The secondary sealing ring 18 abuts directly the radial outer groove flank 6a of the ring groove 6.

The sealing arrangement 1 shown in **Fig. 3b** differs from Fig. 1 only in that a further seal **24** is additionally disposed within the ring groove 6 between the seal 10 and the radial inner (high pressure sided) groove flank **6b** of the ring groove 6. As shown, the further seal 24 can comprise a further secondary sealing ring **25** made of a metallic or polymer material and a further backup ring **26** made of a high strength polymer material. The further backup ring 26 is surrounded by and in circumferential contact with the further secondary sealing ring 25. The further secondary sealing ring 25 can be held on the further backup ring 26 in an axially non-displaceable manner, in particular by means of a positive-locking connection. To this end, the further secondary sealing ring 25 and the further backup ring 26 can radially abut each other by radial end sides **27**, **28**, which are formed polygonal or curved complementary, respectively, preferably with the same curvature. Within the ring groove 6, the further secondary sealing ring 25 faces the seal 10. The compressed helical spring 17 presses the further secondary sealing ring 25 and the further backup ring 26 radially inwards and, as a result, the further backup ring 26 is pressed against the radial inner groove flank 6b.

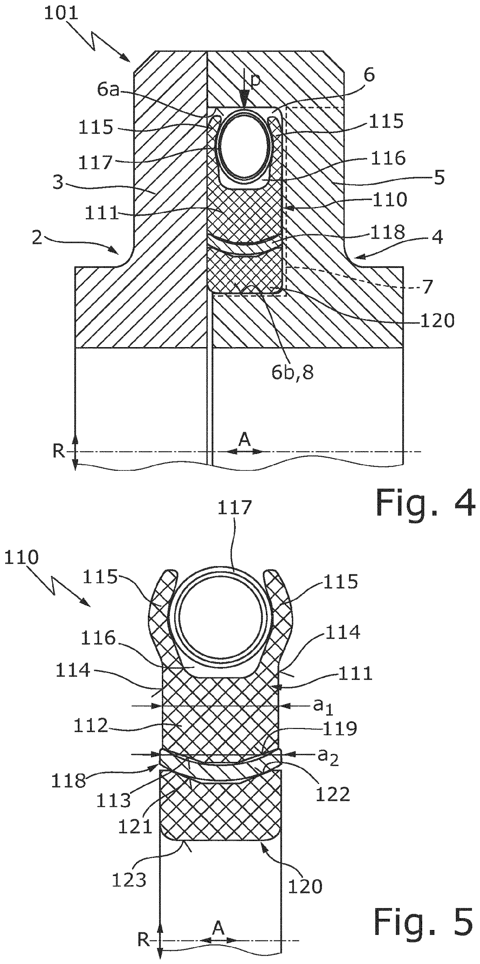

The sealing arrangement **101** shown in **Fig. 4** differs from the sealing arrangement 1 by a seal **110** comprising the radial U-shaped primary sealing ring **111**, the secondary sealing ring **118** and the backup ring **120** in reverse radial order. As shown in **Fig. 5**, the annular groove **116** of the primary sealing ring 111 is radially open outwards, the secondary sealing ring 118 is surrounded by and in contact with the base ring section **112** of the primary sealing ring 111 and the backup ring 120 is surrounded by and in contact with the secondary sealing ring 118. The two sealing lips **115** extend radially outwards away from the base ring section 112 and are spaced apart from each other and curved outwards in the axial direction A. The helical spring 17 **117** is disposed within the annular groove 116 for energizing the sealing lips 115. Preferably, the axial width a2 of the secondary sealing ring 118 is greater than the axial width a1 between the axial outer sides **114** of the base ring section 112 such that the secondary sealing ring 118 axially protrudes over the axial outer sides 114 on both sides. Alternatively, the secondary sealing ring 118 can be flush with the axial outer sides 114.

In the embodiment shown, the radial inner end side **113** of the base ring section 112 is curved convexly in the radial direction R and the radial outer end side **119** of the secondary sealing ring 118 is curved concavely in the radial direction R, preferably with the same curvature. The radial inner end side **121** of the secondary sealing ring 118 is curved convexly in the radial direction R and the radial outer end side **122** of the backup ring 20 is curved concavely in the radial direction R, preferably with the same curvature. The inner radial side of the backup ring 120 is denoted by **123.**

In the sealing arrangement 101 shown in Fig. 4, the seal 110 is disposed within the ring groove 6 with the inner radial side 123 of the backup ring 120 abutting the radial inner (low pressure sided) groove flank **6b** of the ring groove 6.

The sealing arrangement 101 shown in **Fig. 6a** differs from Fig. 4 only in that no backup ring is provided within the ring groove 6. The secondary sealing ring 118 abuts directly the radial inner groove flank 6b of the ring groove 6.

The sealing arrangement 101 shown in **Fig. 6b** differs from Fig. 4 only in that a further seal 1**24** is additionally disposed within the ring groove 6 between the seal 110 and the radial outer groove flank 6a of the ring groove 6. As shown, the further seal 124 can comprise a further secondary sealing ring **125** made of a metallic or polymer material and a further backup ring **126** made of a high strength polymer material. The further backup ring 126 is surrounded by and in circumferential contact with the further secondary sealing ring 125. The further secondary sealing ring 125 can be held on the further backup ring 126 in an axially non-displaceable manner, in particular by means of a positive-locking connection. Within the ring groove 6, the further secondary sealing ring 125 faces the seal 110. The compressed helical spring 117 presses the further secondary sealing ring 125 and the further backup ring 126 radially outwards and, as a result, the further backup ring 126 is pressed against the radial outer groove flank 6a.

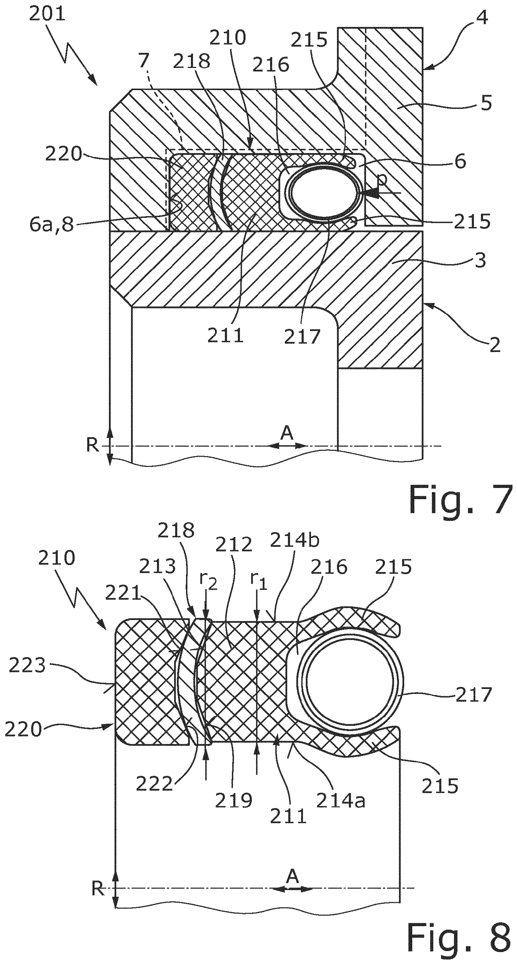

The sealing arrangement **201** shown in **Fig. 7** differs from the sealing arrangement 1 by a seal **210** comprising an axial U-shaped primary sealing ring **211** made of elastic polymer material, a secondary sealing ring **218**, the backup ring **220**, and a helical spring **217.** Further, the ring groove 6 is axially open. As shown in **Fig. 8**, the primary sealing ring 211 has a base ring section **212** with a radial inner side **214a** and a radial outer side **214b**, two sealing lips **215** extending axially away from the base ring section 212 and being spaced apart from each other and curved outwards in the radial direction R, and an annular groove **216** provided between the sealing lips 215 and being axially open in the direction away from the base ring section 212. The sealing lips 215 protrude radially beyond the radial inner and outer sides 214a, 214b of the base ring section 212. The helical spring 217 is disposed within the annular groove 216 for energizing the sealing lips 215. In the embodiment shown, the sealing lips 215 are curved convexly in the axial direction **R** in order to partly encompass the helical spring 217.

The base ring section 212 of the primary sealing ring 211 and the secondary sealing ring 218 abut each other axially by axial end sides **213**, **219** which are formed polygonal or curved complementary, preferably with the same curvature. In the embodiment shown, the axial end side 213 of the base ring section 212 is curved convexly in the axial direction A and the axial end side 22 of the secondary sealing ring 218 is curved concavely in the radial direction A, preferably with the same curvature. Preferably, the radial width **r2** of the secondary sealing ring 218 is greater than the axial width **r1** between the radial inner and outer sides 214a, 214b of the base ring section 12 such that the secondary sealing ring 218 radially protrudes over the radial inner and outer sides 214a, 214b on both sides. Alternatively, the secondary sealing ring 218 can be flush with the radial inner and outer sides 214a, 214b.

The secondary sealing ring 218 and the backup ring 220 can abut each other axially by axial end sides **221**, **222**, which are formed polygonal or curved complementary, preferably with the same curvature. In the embodiment shown, the axial end side 221 of the secondary sealing ring 218 is curved convexly in the axial direction A and the axial end side 222 of the backup ring 220 is curved concavely in the axial direction A, preferably with the same curvature. The outer end side of the backup ring 20 is denoted by **223.**

In the sealing arrangement 201 shown in Fig. 7, the seal 210 is disposed within the ring groove 6 with the axial end side 223 of the backup ring 220 abutting the axial (low pressure sided) groove flank 6a of the ring groove 6. The seal 210 is radially compressed between the glands 3, 5 and, as a result, the sealing lips 215 are elastically deformed between the glands 3, 5 and the helical spring 217 is compressed between the sealing lips 215. The sealing lips 215 are pressed against the glands 3, 5 by the compressed helical spring 217 to seal the connection of the glands 3, 5. and by high gas pressure p acting in the annular groove 216, whereby the polymer material of the primary sealing ring 211 is pushed into irregularities of the mating surfaces of the glands 3, 5. Further, the high gas pressure p acting on the seal 210 forces the primary sealing ring 211 to expand axially onto the secondary sealing ring 218. This further increases the contact forces of the secondary sealing ring 218 against the glands 3, 5, and thus further improve the sealing efficiency. As a result, the seal 210 forms a dual function seal.

The sealing arrangement 1 shown in **Fig. 9a** differs from Fig. 8 only in that no backup ring is provided within the ring groove 6. The secondary sealing ring 218 abuts directly the axial (high pressure sided) groove flank 6a of the ring groove 6.

The sealing arrangement 1 shown in **Fig. 9b** differs from Fig. 8 only in that a further seal **224** is additionally disposed within the ring groove 6 between the seal 10 and the axial groove flank 6b of the ring groove 6. As shown, the further seal 224 can comprise a further secondary sealing ring **225** made of a metallic or polymer material and a further backup ring **226** made of a high strength polymer material. The further secondary sealing ring 225 and the further backup ring 226 can abut each other axially by axial end sides, which are formed polygonal or curved complementary, respectively, preferably with the same curvature. Within the ring groove 6, the further secondary sealing ring 225 faces the seal 210. The compressed helical spring 217 presses the further secondary sealing ring 225 and the further backup ring 226 axially and, as a result, the further backup ring 226 is pressed against the radial inner groove flank 6b.

Instead of being disposed in a ring groove 6 as shown in Figs. 1-9, the seal 10, 110, 210 can alternatively be disposed in a stepped recess **7** shown in dashed lines in Figs. 1, 4 and 7. The end side 21, 23; 121, 123; 221, 223, facing away from the sealing lips 15; 115; 215, of the secondary sealing ring 18; 118; 218 or, if available, the backup ring 20; 120; 220 abuts a step **8** of the stepped recess 7.

## Claims

1. Seal (10; 110; 210) comprising
- a radial U-shaped primary sealing ring (11; 111) made of elastic polymer material, wherein the radial U-shaped primary sealing ring (11; 111) has a base ring section (12; 112) with two parallel axial outer sides (14; 114), two sealing lips (15; 115) extending radially away from the base ring section (12; 112) and being spaced apart from each other and curved outwards in the axial direction (A), and an annular groove (16; 116) provided between the sealing lips (15; 115) and being radially open in the direction away from the base ring section (12; 112), and wherein the sealing lips (15; 115) protrude axially beyond the axial outer sides (14; 114) of the base ring section (12; 112), or
an axial U-shaped primary sealing ring (211) made of elastic polymer material, wherein the axial U-shaped primary sealing ring (211) has a base ring section (212) with a radial inner side (214a) and a radial outer side (214b), two sealing lips (215) extending axially away from the base ring section (212) and being spaced apart from each other and curved outwards in the radial direction (R), and an annular groove (216) provided between the sealing lips (215) and being axially open in the direction away from the base ring section (212), and wherein the sealing lips (215) protrude radially beyond the radial inner and outer sides (214a, 214b) of the base ring section (212),
- a circumferential spring (17; 117; 217) disposed within the annular groove (16; 116; 216) for energizing the sealing lips (15; 115; 215), and
- a secondary sealing ring (18, 118; 218) made of a material stiffer than the polymer material of the primary sealing ring (11, 111; 211), wherein the base ring section (12; 112) of the radial U-shaped primary sealing ring (11; 111) and the secondary sealing ring (18; 118) abut radially each other, or wherein the base ring section (212) of the axial U-shaped primary sealing ring (211) and the secondary sealing ring (218) axially abut each other.

2. Seal according to claim 1, wherein the annular groove (16) of the radial U-shaped primary sealing ring (11) is radially open inwards and the base ring section (12) of the radial U-shaped primary sealing ring (11) is surrounded by and in contact with the secondary sealing ring (18), or wherein the annular groove (116) of the radial U-shaped primary sealing ring (111) is radially open outwards and the secondary sealing ring (118) is surrounded by and in contact with the base ring section (112) of the radial U-shaped primary sealing ring (111).

3. Seal according to claim 1 or 2, wherein the sealing lips (15; 115) of the radial U-shaped primary sealing ring (11; 111) are curved convexly in the axial direction (A), or wherein the sealing lips (215) of the axial U-shaped primary sealing ring (211) are curved convexly in the radial direction (R).

4. Seal according to one of the preceding claims, wherein the base ring section (12; 112) of the radial U-shaped primary sealing ring (11; 111) and the secondary sealing ring (18; 118) are held on each other in an axially non-displaceable manner, in particular by means of a positive-locking connection.

5. Seal according to one of the preceding claims, wherein the base ring section (12; 112) of the radial U-shaped primary sealing ring (11; 111) and the secondary sealing ring (18; 118) radially abut each other by radial end sides (13, 19; 113, 119) one of which is curved convexly in the radial direction (R) and the other one is curved concavely in the radial direction (R), preferably with the same curvature, or wherein the base ring section (212) of the axial U-shaped primary sealing ring (211) and the secondary sealing ring (218) axially abut each other by axial end sides (213, 219) one of which is curved convexly in the axial direction (A) and the other one is curved concavely in the axial direction (A), preferably with the same curvature.

6. Seal according to one of the preceding claims, wherein the secondary sealing ring (18; 118) is axially flush with the axial outer sides (14; 114) of the base ring section (12; 112) of the radial U-shaped primary sealing ring (11; 111) or protrudes over the axial outer sides (14; 114) on both sides, or wherein the secondary sealing ring (218) is radially flush with the radial inner and outer sides (214a, 214b) of the base ring section (212) of the axial U-shaped primary sealing ring (211) or radially protrudes over the radial inner and outer sides (214a, 214b) on both sides.

7. Seal according to one of the preceding claims, further comprising a backup ring (20; 120; 220) made of a high strength polymer material, wherein the secondary sealing ring (18; 118) of the radial U-shaped primary sealing ring (11; 111) and the backup ring (20; 120) radially abut each other, or the secondary sealing ring (218) of the radial U-shaped primary sealing ring (211) and the backup ring (220) axially abut each other.

8. Seal according to claim 7, wherein the secondary sealing ring (18; 118) of the radial U-shaped primary sealing ring (11; 111) and the backup ring (20; 120) are held on each other in an axially non-displaceable manner, in particular by means of a positive-locking connection.

9. Seal according to claim 7 or 8, wherein the secondary sealing ring (18; 118) of the radial U-shaped primary sealing ring (11; 111) and the backup ring (20; 120) radially abut each other by radial end sides (21, 22; 121, 122) one of which is curved convexly in the radial direction (R) and the other one is curved concavely in the radial direction (R), preferably with the same curvature, or wherein the secondary sealing ring (218) of the axial U-shaped primary sealing ring (211) and the backup ring (220) axially abut each other by axial end sides (221, 222) one of which is curved convexly in the axial direction (A) and the other one is curved concavely in the axial direction (R), preferably with the same curvature.

10. Seal according to one of the preceding claims, wherein the secondary sealing ring (18; 118; 218) is made from a metallic or polymer material.

11. Seal according to claim 10, wherein the secondary sealing ring (18; 118; 218) is plated with a material softer than the metallic material.

12. Sealing arrangement (1; 101; 201) for sealing a connecting of two components, comprising a first component (2) and a second component (4) at least one of which has a ring groove (6) or a stepped recess (7), and comprising a seal (10; 110; 210) according to one of the preceding claims, which is disposed within the ring groove (6) or the stepped recess (7), wherein the end side (21, 23; 121, 123; 221, 223), facing away from the sealing lips (15; 115; 215), of the secondary sealing ring (18; 118; 218) or, if available, the backup ring (20; 120; 220) abuts one of the two opposite groove flanks (6a, 6b) of the ring groove (6) or on a step (8) of the stepped recess (7), wherein the sealing lips (15; 115; 215) are compressed and elastically deformed between the two components (2, 4) and pressed against the two components (2, 4) by the compressed circumferential spring (17; 117; 217) to seal the connection of the two components (2, 4).

13. Sealing arrangement according to claim 12, wherein a further seal (24; 124; 224) is disposed within the ring groove (6) between the seal (10; 110; 210) and the other of the two groove flanks (6a, 6b) of the ring groove (6), wherein the further seal (24; 124; 224) is pressed against the other groove flank by the compressed circumferential spring (17; 117; 217) which protrudes over the sealing lips (15; 115; 215).

14. Sealing arrangement according to claim 13, wherein the further seal (24; 124; 224) comprises a further secondary sealing ring (25; 125; 225) made of metallic or polymer material and a further backup ring (26; 126; 226) made of a high strength polymer material, which abut each other with the further secondary sealing ring (25; 125; 225) facing the seal (10; 110; 210) and the further backup ring (26; 126; 226) abutting the other groove flank.

15. Sealing arrangement according to claim 14, wherein the further secondary sealing ring (26; 126) is held on the further backup ring (26; 126) in an axially non-displaceable manner, in particular by means of a positive-locking connection.
